# EUROPÄISCHE PATENTSCHRIFT

(11) **EP 1 154 623 B1**
(45) Veröffentlichungstag und Bekanntmachung des Hinweises auf die Patenterteilung: **19.07.2006**
(21) Anmeldenummer: 01108817.6
(22) Anmeldetag: 06.04.2001
(51) Int. Cl.: H04M 11/00, H04M 1/725, G08C 19/28

(54) **Tragbares Kommunikationsgerät und Verfahren zur Fernbedienung**
Portable communication device and method for remote control
Appareil de communication portable et méthode de commande à distance

(30) Priorität: 10.05.2000 DE 10022567
(43) Veröffentlichungstag der Anmeldung: 14.11.2001
(73) Patentinhaber: Sew-Eurodrive GmbH & Co. KG, 76646 Bruchsal (DE)
(72) Erfinder: Lingenfelser, Achim, 75015 Bretten (DE); Tüngler, Eberhard, Dr., 76646 Bruchsal (DE)

(56) Entgegenhaltungen:
- WO-A-00/17738
- US-A- 5 201 067
- US-A- 5 726 645

## Beschreibung

Die Erfindung betrifft ein System, bestehend aus zumindest Umrichter, Server und tragbarem Kommunikationsgerät.

Als tragbares Kommunikationsgerät mit Mitteln zum Senden und/oder Empfangen von Infrarot,
wobei das tragbare Kommunikationsgerät mindestens Antenne, Anzeigemittel und Eingabemittel umfasst, sind aus der Internet-Seite http://www.nokia.de/mobile_phones/produkte/9110i/index.html und http://www.nokia.de/mobile_phones/daten/index.html Handys bekannt, die jeweils eine integrierte Infrarot-Schnittstelle oder eine IrDA-Schnittstelle aufweisen. Damit ist ein solches Handy beispielsweise als Modem zur Datenübertragung an ein Laptop einsetzbar.

Die Reichweite von solchen Infrarot-Übertragungen beträgt beispielhaft ein oder mehrere Meter.

Bekannt sind auch Fernsehgeräte oder andere Geräte, die mit jeweils einem Infrarot-Fernsteuergerät fern bedienbar sin. Dabei werden Infrarot-Pulsfolgen übertragen, die gemäß einer Codierung bestimmt sind. Im Folgenden wird hierfür auch der Begriff Codiertabelle verwendet, der die mit dem Codieren und Bestimmen der Infrarot-Pulsfolgen zusammenhängenden Verfahrensschritte als Begriff zusammenfasst. Beispielsweise ist der Einschalt-Befehl als andere Pulsfolge codiert wie der Befehl zum Erhöhen der Lautstärke oder eines anderen Parameters oder der Befehl zum Ausschalten des Gerätes. Von Nachteil ist dabei, dass verschiedene Geräte, die sich von Art und/oder Typ unterscheiden oder von einem anderen Hersteller gefertigt sind, verschiedene Codierungen bei der jeweils verwendeten Infrarot-Pulsfolge aufweisen. Gleiche Befehle führen also zu verschiedenen Infrarot-Pulsfolgen. Somit sind nicht alle Infrarot-Fernsteuerungen kompatibel.

Zur Bedienung vieler Geräte durch eine Infrarot-Fernbedienung sind auch sogenannte Universal-Fernbedienungen bekannt. Diese werden zu Beginn an die jeweiligen Geräte angepasst, indem durch ein Suchverfahren die jeweils passenden Codiertabellen gefunden und abgespeichert werden. Von Nachteil ist dabei, dass diese Universalbedienung zusätzlich erworben werden muss und kostspielig ist.

Statt Infrarot sind zur Datenübertragung bei tragbaren Kommunikationsgeräten auch Methoden bekannt, die elektromagnetische Wellen anderer Frequenz verwenden. Beispielhaft ist der Bluetooth-Standard bekannt, der beispielhaft in einem Frequenzbereich um 2,45 GHz herum eingesetzt wird und eine große Reichweite aufweist. Außerdem ist bei dem Bluetooth-Standard ein häufiger Frequenzwechsel, beispielhaft 1600 mal pro Sekunde innerhalb dieses Frequenzbereichs, zur Erhöhung der Abhörsicherheit ermöglicht.

Aus der WO 00 17738 A, insbesondere Seite 6 Zeile 10 bis 20, ist eine Fernsteuerungsvorrichtung (control device 100) zur Infrarot-Fernsteuerung von Fernsehgeräten bekannt, die separate Eingabemittel und Anzeigemittel umfasst Über einen mit dem Internet verbundenen PC wird ein zum Fernsehgerät gehöriger Code, also ein ausführbares Programm, ausgewählt und gedownloadet und in der Fernsteuerungsvorrichtung ausgeführt Dieser Code stellt dann die graphische Schnittstelle dar sozusagen das Erscheinungsbild der Anzeigemittel. Das Vorhandensein von Eingabemitteln an der Fernsteuerungsvorrichtung ist zu vermuten.

Wesentlich ist bei dieser Schrift allerdings, dass der Code der graphischen Schnittstelle heruntergeladen wird und ausgeführt wird. Im Internet aktualisierte Software ist also erneut auf Veranlassen des Bedieners anzuwählen und herunterzuladen, was kompliziert ist und Zeit kostet. Außerdem ist beim Herunterladen des Codes eine große Datenmenge zu transferieren, was Zeit kostet.

Aus der US - A 5 201 067 ist ein persönliches Kommunikationsgerät bekannt mit einer Möglichkeit zum Download von Fernsteuer-Signalinformation.

Aus der US 5 726 645 ist eine Rückmeldung vom zu bedienenden Gerät an die Fernsteuerung bekannt, insbesondere zum Erkennen des Gerätetyps.

Der Erfindung liegt daher die Aufgabe zugrunde, ein System mit Umrichter zur Fernbedienung weiterzubilden.

Erfindungsgemäß wird die Aufgabe bei dem System nach den in Anspruch 1 angegebenen Merkmalen gelöst.

Wesentliche Merkmale bei dem System sind, dass es aus zumindest Umrichter, Server und tragbarem Kommunikationsgerät mit Mitteln zum Senden und/oder Empfangen von Strahlung besteht,
wobei
das tragbare Kommunikationsgerät mindestens Antenne, Anzeigemittel und **Eingabemittel umfasst,**
das tragbare Kommunikationsgerät derart gestaltet ist, dass der Umrichter als Gerät vom tragbaren Kommunikationsgerät aus per Strahlung
■ fern bedienbar sind,
■ und jeweils Parameter des jeweiligen Geräts veränderbar sind,
■ und Aktionen des jeweiligen Geräts auslösbar sind,
■ und Änderungen des Betriebszustandes oder Zustandes des jeweiligen Geräts auslösbar sind,
wobei der Umrichter jeweils zumindest Mittel zum Empfangen und Senden von Strahlung aufweist und unter Verwendung verschiedener Codiertabellen, die zum Erzeugen, Bestimmen und Berechnen von Pulsfolgen der Strahlung verwendet werden, betrieben wird,
wobei die Strahlung Infrarot ist oder die Strahlung akustische oder elektromagnetische Wellen, wie Infrarot, Funkwellen, Mikrowellen oder Wellen mit etwa 2,45 Ghz für den Bluetooth-Standard, umfasst,
wobei das tragbare Kommunikationsgerät eine IrDA-Schnittstelle für Infrarot aufweist,
wobei das tragbare Kommunikationsgerät mit seiner Antenne zum Aufbau einer Mobilfunkverbindung geeignet ausgeführt ist,
wobei die Anzeigemittel des tragbaren Kommunikationsgeräts derart gestaltet sind, dass Internetseiten anzeigbar sind,
wobei mittels der Eingabemittel des tragbaren Kommunikationsgeräts eingegebenen Eingabe-Informationen per Mobilfunkverbindung und/oder Internetverbindung an den Server leitbar sind, mittels dessen dann Informationen für eine vom tragbaren Kommunikationsgerät per Strahlung abzustrahlende Pulsfolge bestimmbar sind und diese Informationen an das tragbare Kommunikationsgerät zum Abstrahlen der Pulsfolge übertragbar sind,
wobei die Codiertabellen im Server vorgesehen sind,
wobei Anzeigemittel und Eingabemittel kombiniert als berührungssensitiver Bildschirm ausgeführt sind,
wobei mittels der Eingabemittel des tragbaren Kommunikationsgeräts mindestens eine Internet- und/oder WAP-Seite anzeigbar ist, die mindestens die vom Gerät abhängige Belegung der Eingabemittel anzeigt,
wobei der Umrichter dazu ausgelegt ist, Parametersatze vom Umrichter am tragbare kommunikationsgerät zu übertragen und auf diesem oder auf einem mittels Mobilfunk-Verbindung verbundenen Server zu speichern, wobei die Parametersätze an einem nächsten Umrichter übertragbar und aktivierbar sind.

Bei der Erfindung sind bei Vorrichtungen und Verfahren, die unter Verwendung des Wortes Infrarot beschrieben sind, immer auch die entsprechenden Vorrichtungen und Verfahren bei Verwendung von akustischen oder elektromagnetischen Wellen anderer Frequenz zu verstehen.

Von Vorteil ist dabei, dass ein sowieso vorhandenes tragbares Kommunikationsgerät eine zusätzliche Funktionalität aufweist, die im Wesentlichen mit Software realisierbar ist und daher eine kostengünstige Fernbedienung darstellt. Außerdem ist die Software vorteilhaft derart ausführbar, dass universelle Kompatibilität erzeugbar ist.

Das tragbare Kommunikationsgerät weist meist eine Mobilfunkverbindung auf. Statt einer Mobilfunkverbindung ist immer auch jede Art von Funkverbindung zu verstehen. Daher ist die Erfindung ebenso bei schnurlosen Telefonen wie auch bei Handys einsetzbar, wenn die entsprechenden Computer oder Server vorhanden sind. Die Mobilfunkverbindung wird dabei beispielsweise durch die schnurlose Verbindung zusammen mit einer Telefon-Verbindung und/oder einer anderen elektrischen und/oder optischen Verbindung ersetzt.

Insbesondere sind Anzeigemittel des tragbaren Kommunikationsgeräts derart gestaltet, dass Internetseiten, insbesondere nach dem WAP-Protokoll, anzeigbar sind. Von Vorteil ist dabei, dass das Handy nur einen WAP-Browser aufweisen muss und die weitere Software auf einem Server installierbar ist, der ständig aktualisierbar ist und die benötigte Rechenleistung zur Verfügung stellt. Daher ist auch der Energieverbrauch des tragbaren Kommunikationsgeräts reduziert. Außerdem benötigt das tragbare Kommunikationsgerät einen kleineren Speicher, was vorteiligerweise zu weiteren Kosteneinsparungen und Gewichtsreduzierungen führt.

Insbesondere ist das Gerät ein Umrichter. Von Vorteil ist dabei, dass der Umrichter fernsteuerbar ist über ein tragbares Kommunikationsgerät. Da fast jeder Service-Techniker ein solches bei sich hat und tragbare Kommunikationsgeräte immer weitere Verbreitung finden, ist ein tragbares Kommunikationsgerät sehr gut verfügbar. Der Umrichter ist auch dann vom Service-Techniker bedienbar, wenn er beispielsweise schwer zugänglich ist, aber die Infrarot-Verbindung herstellbar ist. Außerdem lassen sich mittels der Erfindung auch Datensätze vom Umrichter ans tragbare Kommunikationsgerät übertragen und auf diesem oder auf einem mittels Mobilfunk-Verbindung verbundenen Server speichern. Bei einem nächsten Umrichter in der industriellen Anlage lässt sich dann der gespeicherte Parametersatz wieder heranholen und auf diesen nächsten Umrichter übertragen und aktivieren. Somit ist sogar ein Vervielfältigen von Parametersätzen ermöglicht. Des weiteren lässt sich auf einem Server die Software derart gestalten, dass die abgelegten und gespeicherten Parametersätze dokumentierbar, verwaltbar und/oder auswertbar sind.

Insbesondere ist als Gerät ein Fernsehgerät, Videogerät, Satellitenreceiver, Kühlschrank, Herd oder ein anderes Haushaltsgerät mit Mitteln zum Empfangen von Infrarot. Von Vorteil ist dabei, dass das tragbare Kommunikationsgerät nicht nur für Geräte im industriellen Bereich sondern auch für Konsumgüter, also einem weiteren Massenmarkt verwendbar ist. Außerdem ist somit nur ein tragbares Kommunikationsgerät für berufliche und private Nutzung notwendig, weshalb somit eine kostengünstige Alternative zur Vielfalt von Fernbedienungen und Handys oder Organizern geschaffen ist.

Insbesondere ist bei der Erfindung bei dem Verfahren zur Fernbedienung von Geräten sind, dass die vom tragbaren Kommunikationsgerät verwendete Codiertabelle zur Fernbedienung je nach Typ und/oder Art des Geräts anpassbar und/oder einstellbar ist. Die Vorteile hierfür sind dieselben wie oben erwähnt. Insbesondere ist die Software des tragbaren Kommunikationsgeräts und der verbundenen Rechner, wie Computer, Server oder dergleichen, derart gestaltbar, dass die Codiertabellen aller Typen und Arten von mit Infrarot fern bedienbaren Geräten hinterlegbar sind und damit verwendbar sind. Außerdem ist natürlich eine ständige Aktualisierung ausführbar, die jeweils die neuen Codiertabellen von neu entwickelten Geräten berücksichtigt. Dazu können die jeweiligen Hersteller ihre entsprechenden Codiertabellen zur Verfügung stellen.

Insbesondere findet das tragbare Kommunikationsgerät die für ein jeweiliges Gerät geeignete Codiertabelle unter Verwendung eines Suchlaufs, bei dem eine Folge von Testpulsfolgen in geeigneter Abfolge gesendet wird. Von Vorteil ist dabei, dass dieser Suchlauf weitgehend automatisierbar ist. Der Bediener muss also nur wenige Eingabeinformationen zur Verfügung stellen. Ein Beispiel für eine solche Eingabeinformation ist der Typ des Geräts, wie Umrichter, Fernseher, Videorecorder oder dergleichen.

Insbesondere ist mit Eingabemitteln des tragbaren Kommunikationsgeräts die für ein Gerät jeweils geeignete Codiertabelle auswählbar und/oder es wird mittels der Anzeigemittel des tragbaren Kommunikationsgeräts mindestens eine Internet-und/oder WAP-Seite angezeigt wird, die nach Eingabe von nicht eindeutigen Informationen über das Gerät, wie Herstellername oder dergleichen, mindestens ein Auswahlmenu anzeigt, an dem Typ und/oder Art von Geräten auswählbar sind und/oder spezielle Bedienfunktionen, die mit einer Codiertabelle des im Auswahlmenu angezeigten Geräts codiert werden, vom Bediener testbar sind oder automatisch getestet werden. Von Vorteil ist dabei, dass mittels einer Software-Auswählfunktion ein entsprechendes Auswahl-Menu dem Bediener geboten wird. Dabei sind die verschiedene Auswahlanordnungen, wie alphabetische Ordnung, Ordnung nach Herstellern, Herstelljahr oder dergleichen, verwendbar. Auch Schnellsuchfunktionen oder intelligente Suchalgorithmen sind einsetzbar, wie beispielsweise das Auswahlangebot einiger Geräte nach Eingabe weniger Buchstaben.

Insbesondere stellt der Server eine gemäß WAP-Protokoll erstellte Internet-Seite zur Verfügung. Von Vorteil ist dabei, dass eine große Kompatibilität zu den meisten tragbaren Kommunikationsgeräten vorliegt, insbesondere Handys und Organizem mit WAP-Browsern.

Insbesondere lädt das tragbare Kommunikationsgerät die für ein jeweiliges Gerät geeignete Codiertabelle von einem Server mittels einer Mobilfunkverbindung und/oder Internetverbindung und/oder es werden mittels der Eingabemittel des tragbaren Kommunikationsgeräts eingegebenen Eingabe-Informationen innerhalb des tragbaren Kommunikationsgeräts unter Verwendung der geeigneten Codiertabelle in eine für das jeweilige Gerät zur Fernbedienung geeignete Infrarot- Pulsfolge verarbeitet. Von Vorteil ist dabei, dass die Codiertabelle zur schnellen Erzeugung und/oder Berechnung der Infrarot-Pulsfolgen im Handy zur Verfügung steht. Es sind also keine Übertragungszeiten während der Berechnung notwendig.

Insbesondere werden mittels der Eingabemittel des tragbaren Kommunikationsgeräts eingegebenen Eingabe-Informationen per Mobilfunkverbindung und/oder Internetverbindung an einen Server geleitet werden, der Informationen für eine vom tragbaren Kommunikationsgerät per Infrarot abzustrahlende Pulsfolge erstellt und an das tragbare Kommunikationsgerät zum Abstrahlen per Infrarot überträgt. Von Vorteil ist dabei, dass zwar Übertragungszeiten die Berechnung verlangsamen aber immer die aktuelle Software mit allen aktuellen Codiertabellen zur Verfügung steht. Somit ist die Software immer schnell gegen neuere Versionen austauschbar und die Menge der Codiertabellen ist um die zu neu hergestellten und auf den Markt gebrachten Geräten gehörenden Codiertabellen erweiterbar.

Insbesondere wird mittels der Eingabemittel des tragbaren Kommunikationsgeräts mindestens eine Internet- und/oder WAP-Seite angezeigt, die mindestens die vom jeweiligen Gerät abhängige Belegung der Eingabemittel, wie Tastenbelegung für Lautstärkeregelung, Drehzahl, Kanalumschaltung oder dergleichen, anzeigt. Von Vorteil ist dabei, dass die Tastenbelegung je nach Typ oder Art des Geräts anpassbar ist und jeweils entsprechend angezeigt wird.

Weiter vorteilhafte Ausgestaltungen ergeben sich aus den Unteransprüchen.

### Bezugszeichenliste

- 1: Umrichter
- 2: Anzeigemittel
- 3: Eingabemittel
- 4: Infrarot-Empfänger
- 5: Eingabemittel
- 6: Handy
- 7: IrDA-Schnittstelle
- 8: Antenne
- 9: Anzeigemittel

### Die Erfindung wird nun anhand von einer Abbildung näher erläutert:

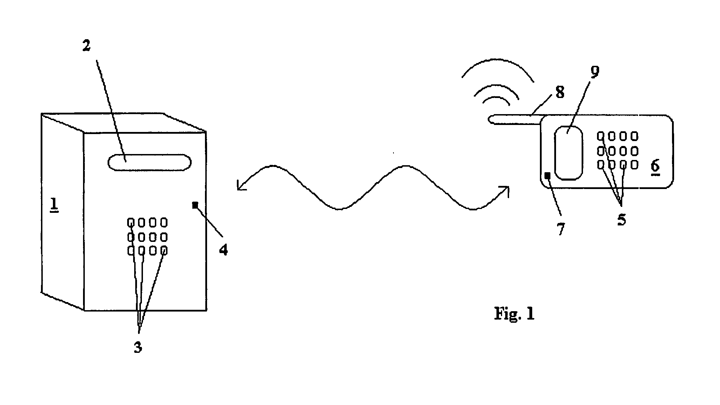

In der Figur 1 ist als Gerät ein Umrichter 1 gezeigt, der Anzeigemittel 2, Eingabemittel 3 und einen Infrarot-Empfänger 4 aufweist. Als Eingabemittel werden Tasten verwendet. Bei einer weiteren erfindungsgemäßen Ausführungsform sind aber auch Drehschalter oder Drehknöpfe als Eingabemittel verwendbar. Darüber hinaus sind auch berührungssensitive Bildschirme oder Displays als kombinierte Eingabemittel 3 und Anzeigemittel 2 verwendbar. Der Infrarot-Empfänger 4 kann bei einer anderen erfindungsgemäßen Ausführungsform auch durch eine Infrarotschnittstelle, wie beispielsweise eine sowohl zum Senden wie auch zum Empfangen von Infrarot geeignete IrDA-Schnittstelle, realisiert sein.

Als tragbares Kommunikationsgerät 6 wird beim erfindungsgemäßen Ausführungsbeispiel ein Handy 6 mit Eingabemitteln 5, Antenne 8 und IrDA-Schnittstelle 7 eingesetzt. Bei einer anderen erfindungsgemäßen Ausführungsform ist anstelle der IrDA-Schnittstelle 7 auch ein einfacher Infrarot-Sender einsetzbar. Als Anzeigemittel 9 wird ein Display eingesetzt. Es weist genügend viele Pixel zur Anzeige einer Internetseite, wie insbesondere einer WAP-Seite auf. Da WAP-Seiten insbesondere für Handys und/oder Organizer gefertigt werden, ist eine ausreichende Lesbarkeit und Erkennbarkeit der Informationen gewährleistet.

Bei der erfindungsgemäßen Ausführungsform stellt das Handy 6 eine Mobilfunk- und/oder Internetverbindung zu einem Server her. Dann wird vom Bediener über die Eingabemittel 5 am Handy 6 eine WAP-Seite angewählt, die am Display 9 angezeigt wird. Nach interaktiver Auswahl, insbesondere Eingabe von Informationen, wie Herstellername des Geräts, des Typs und/oder der Art des Geräts, wird ein Herunterladen der für das eingegebene Gerät geeigneten Codiertabelle ermöglicht. Der Typ des Geräts bedeutet auch beispielsweise eine Version des Geräts. Die Art des Geräts klassifiziert die Geräte in Gruppen, wie Fernsehgerät, Umrichter, Video, Sat-Receiver, usw.. Die Codiertabelle ist dann einem Menupunkt des Bedienungsprogramms des Handys zugeordnet.

Am Handy 6 kann der Bediener dann diesen Menupunkt auswählen. Dadurch wird die zugehörige Codiertabelle aktiviert und den einzelnen Eingabemitteln 5 des Handys 6 eine jeweilige Funktion zugewiesen. Beispielsweise ist eine solche Funktion das Ein-/ Ausschalten des Geräts 1 oder ein Verändern eines Parameterwerts des Geräts 1. Nach der Aktivierung und Zuordnung werden die mit den Eingabemitteln 5 des Handys 6 eingegebenen Informationen, wie beispielsweise das Drücken der Taste '0' oder '1' usw., mit Hilfe der Codiertabelle in eine zugehörige Infrarot-Pulsfolge umgerechnet. Diese Infrarot-Pulsfolge wird vom Gerät 1 empfangen, der zugehörige Parameter verändert, die zugehörige Funktion ausgelöst und/oder die zugehörige Funktion ausgeführt.

Somit ist eine Fernbedienung des Geräts 1 per Infrarot ausführbar. Beispielsweise ist ein erster Parameter bei dem Umrichter 1 der Drehzahl des Antriebs zugeordnet. Der Erhöhung dieses ersten Parameterwerts ist beispielsweise die Taste '3' bei den Eingabemitteln 5 des Handys 6 zugeordnet. Durch Drücken der Taste '3' wird eine Pulsfolge unter Verwendung der Codiertabelle errechnet und per Infrarot abgestrahlt. Der Umrichter 1 empfängt die Infrarot-Pulsfolge und führt die zugehörige Aktion aus, also die Erhöhung des ersten Parameterwerts. Im beschriebenen Beispiel ist dies das Erhöhen des Parameters für die Drehzahl des Antriebs und infolge dessen auch die Erhöhung der Drehzahl selbst.

Vom Handy aus können auch weitere andersartige Umrichter bedient werden. Beispielsweise kann vom Handy aus ein Umrichter fern bedient werden, der eine andere Codiertabelle benötigt.

Die zu einem Parameter oder einer Funktion gehörige Infrarot-Pulsfolge unterscheidet sich dabei also von der zuerst beschriebenen.

Für diesen Fall wird die Codiertabelle durch Wiederholung der schon beschriebenen Schritte im Handy aktiviert und nach Auswahl des weiteren Geräts zur Generierung von zur Fernbedienung geeigneten Pulsfolgen verwendet, die jeweils von Eingabemitteln ausgelöst werden.

Als Gerät sind nicht nur Umrichter sondern auch Haushaltsgeräte, wie Fernsehgeräte, Videogeräte, Satellitenreceiver, CD-Player, Tuner, Verstärker, HIFI-Anlagen, PC's oder dergleichen, verwendbar. Für alle Infrarot-fernbedienbaren Geräte lässt sich das Handy in der beschriebenen Weise einsetzen, wobei jeweils eine entsprechend geeignete Codiertabelle aktiviert wird.

Statt eines Handys ist bei einem weiteren erfindungsgemäßen Ausführungsbeispiel ein Organizer oder ein Laptop verwendbar, der einen geeigneten Infrarotsender oder eine geeignete Infrarot-Schnittstelle aufweist.

Bei einem weiteren alternativen erfindungsgemäßen Ausführungsbeispiel wird ein gegenüber dem erwähnten Ausführungsbeispiel abgeändertes Verfahren angewandt.
Wiederum wird am tragbaren Kommunikationsgerät, also Handy, Laptop, Organizer, die Internet- und/oder WAP-Seite für das Gerät ausgewählt. Dann werden die mit den Eingabemitteln 5 eingegebenen Informationen, wie beispielsweise das Drücken der Taste '0', per Telefonverbindung und/oder Internetverbindung an den Server oder einen mit diesem verbundenen Rechner geleitet. Dort werden mittels der entsprechenden und dort vorhandenen Codiertabelle Informationen für eine Pulsfolge errechnet. Die Informationen für die Pulsfolge werden dann an das tragbare Kommunikationsgerät per Telefonverbindung und/oder Internetverbindung übertragen. Das tragbare Kommunikationsgerät erzeugt dann die entsprechenden Infrarot-Pulse für das Gerät.

Das letztgenannte Ausführungsbeispiel ist insbesondere für einen Servicetechniker vorteilhaft, da er nicht alle möglichen Codiertabellen mit sich transportieren muss, sondern jederzeit sogar die aktuellsten Codiertabellen und/oder Softwareversionen zur Verfügung hat. Er hat sozusagen eine ständig verfügbare universelle Fernbedienung zur Verfügung.

Außerdem ist bei diesem Ausführungsbeispiel keine spezielle Software im tragbaren Kommunikationsgerät notwendig. Denn mittels der Internet-Technik, insbesondere WAP-Technik, und dem entsprechenden Browser, also Programm zur Anzeige von Internet-Daten, insbesondere WAP-Daten, sind handelsübliche tragbare Kommunikationsgeräte einsetzbar.

Bei einem weiteren alternativen erfindungsgemäßen Ausführungsbeispiel weist der Umrichter 1 eine IrDA-Schnittstelle statt eines Infrarot-Empfängers 4 auf und ist somit ebenso wie das Handy 6 zur bidirektionalen Datenübertragung geeignet. Bei diesem Ausführungsbeispiel werden also auch vom Umrichter 1 Werte, wie Parameterwerte, mit einer Codiertabelle innerhalb des Umrichters 1 in eine per Infrarot abgestrahlte Pulsfolge umgerechnet. Diese wird von der IrDA-Schnittstelle des Handys 6 empfangen und decodiert. Die zugehörigen Informationen, wie Wert des Parameters, werden dann mit den Anzeigemitteln 9 angezeigt. Dabei sind wiederum zwei erfindungsgemäße Verfahren ausführbar. Beim ersten Verfahren werden die Informationen vom Handy 6 per IrDA-Schnittstelle empfangen und innerhalb des Handys nach Decodierung den Anzeigemitteln 9 zugeführt. Beim zweiten Verfahren werden die Informationen zunächst per Mobilfunk- und/oder Internetverbindung an einen Server geleitet, der eine entsprechend aufbereitete und berechnete Internet- und/oder WAP-Seite an das Handy 6 überträgt. Diese Seite wird dann den Anzeigemitteln 9 zugeleitet. Somit steht insbesondere dem Servicetechniker jeweils die aktuellste Version von Software und Codiertabelle zur Verfügung.

Die Erfindung betrifft auch alle Vorrichtungen und Verfahren, die sich von den in dieser Schrift beschriebenen nur darin unterscheiden, dass statt nach dem WAP-Protokoll erstellter Seiten auch andere Protokolle zum Erstellen von Internet-Seiten verwendet werden, wie html-, xml-Protokoll oder dergleichen.

Die Erfindung umfasst auch alle Vorrichtungen und Verfahren, die den beschriebenen entsprechen, aber statt Infrarot akustische oder elektromagnetische Wellen anderer Frequenz verwenden.

## Patentansprüche

1. System, bestehend aus zumindest Umrichter, Server und tragbarem Kommunikationsgerät (6) mit Mitteln (7) zum Senden und/oder Empfangen von Strahlung,
wobei
das tragbare Kommunikationsgerät (6) mindestens Antenne (8), Anzeigemittel (9) und Eingabemittel (5) umfasst,
das tragbare Kommunikationsgerät (6) derart gestaltet ist, dass der Umrichter als Gerät (1) vom tragbaren Kommunikationsgerät (6) aus per Strahlung
■ fern bedienbar sind,
■ und jeweils Parameter des jeweiligen Geräts (1) veränderbar sind,
■ und Aktionen des jeweiligen Geräts (1) auslösbar sind,
■ und Änderungen des Betriebszustandes oder Zustandes des jeweiligen Geräts (1) auslösbar sind,
wobei der Umrichter jeweils zumindest Mittel (4) zum Empfangen und Senden von Strahlung aufweist und unter Verwendung verschiedener Codiertabellen, die zum Erzeugen, Bestimmen und Berechnen von Pulsfolgen der Strahlung verwendet werden, betrieben wird,
wobei die Strahlung Infrarot ist oder die Strahlung akustische oder elektromagnetische Wellen, wie Infrarot, Funkwellen, Mikrowellen oder Wellen mit etwa 2,45 Ghz für den Bluetooth-Standard, umfasst
wobei das tragbare Kommunikationsgerät (6) eine IrDA-Schnittstelle (7) für Infrarot aufweist,
wobei das tragbare Kommunikationsgerät (6) mit seiner Antenne (8) zum Aufbau einer Mobilfunkverbindung geeignet ausgeführt ist,
wobei die Anzeigemittel (9) des tragbaren Kommunikationsgeräts (1) derart gestaltet sind, dass Internetseiten anzeigbar sind,
wobei mittels der Eingabemittel (9) des tragbaren Kommunikationsgeräts (6) eingegebenen Eingabe-Informationen per Mobilfunkverbindung und/oder Internetverbindung an den Server leitbar sind, mittels dessen dann Informationen für eine vom tragbaren Kommunikationsgerät (6) per Strahlung abzustrahlende Pulsfolge bestimmbar sind und diese Informationen an das tragbare Kommunikationsgerät zum Abstrahlen der Pulsfolge übertragbar sind,
wobei die Codiertabellen im Server vorgesehen sind,
wobei Anzeigemittel (9) und Eingabemittel (5) kombiniert als berührungssensitiver Bildschirm ausgeführt sind,
wobei mittels der Eingabemittel (5) des tragbaren Kommunikationsgeräts (6) mindestens eine Internet- und/oder WAP-Seite anzeigbar ist, die mindestens die vom Gerät (1) abhängige Belegung der Eingabemittel anzeigt,
wobei der Umrichter dazu ausgelegt ist, Parametersätze vom Umrichter aus tragbare kommunikationsgerät zu übertragen und auf diesem oder auf einem mittels Mobilfunk-Verbindung verbundenen Server zu speichern, wobei die Parametersätze an einem nächsten Umrichter ubertragbar und aktivierbar sind.

2. System nach Anspruch 1,
**dadurch gekennzeichnet, dass**
das tragbare Kommunikationsgerät (6) ein Handy (6) oder ein Organizer oder ein Laptop ist.

3. System nach Anspruch 1,
**dadurch gekennzeichnet, dass**
die auf dem Server gespeicherten Parametersätze dokumentierbar, verwaltbar oder auswertbar sind.

## Claims

1. A system consisting of at least a converter, server and portable communications device (6), said device having means (7) for transmitting and/or receiving radiation,
the portable communications device (6) comprising at least an aerial (8), display means (9) and input means (5),
the portable communications device (6) being designed so that, from the portable communications device (6), by means of radiation, the converter as a device (1)
• can be remotely controlled,
• and parameters of the respective device (1) can be modified,
• and actions of the respective device (1) can be initiated,
• and changes to the operating state or state of the respective device (1) can be initiated,
each converter having at least means (4) for receiving and transmitting radiation and being operated using different coding tables which are used to generate, define and compute pulse repetitions of the radiation,
the radiation being infrared or the radiation comprising acoustic waves or electromagnetic waves such as infrared, radio waves, microwaves or waves of approximately 2.45 GHz for the Bluetooth standard,
the portable communications device (6) having an IrDA interface (7) for infrared,
the portable communications device (6), with its aerial (8), being suitably designed for a mobile radio telephone link set-up,
the display means (9) of the portable communications device (1) [*sic - recte 6]* being designed so that Internet pages can be displayed,
input information which has been input using the input means (9) [*sic - recte 5*] of the portable communications device (6) being routable via a mobile radio telephone link and/or an Internet connection to the server, by means of which server it is then possible to define information for a pulse repetition that is to be emitted from the portable communications device (6) by means of radiation and to transfer this information to the portable communications device for emission of the pulse repetition,
the coding tables being provided in the server,
display means (9) and input means (5) being combined in the form of a touch-sensitive screen,
it being possible, using the input means (5) of the portable communications device (6), to display at least one Internet page and/or WAP page which indicates at least the assignment of the input means depending on the device (1),
the converter being designed to transfer parameter sets from the converter to the portable communications device and to store them on the said device or on a server connected by means of a mobile radio telephone link, the parameter sets being transferable to and activatable on a next converter.

2. A system according to claim 1,
**characterised in that**
the portable communications device (6) is a mobile phone (6) or an organiser or a laptop.

3. A system according to claim 1,
**characterised in that**
the parameter sets stored on the server can be documented, managed or evaluated.

## Revendications

1. Système se composant au moins d'un variateur de vitesse, d'un serveur et d'un appareil de communication portable (6) avec des moyens (7) pour émettre et/ou recevoir un rayonnement,
sachant que
l'appareil de communication portable (6) comprend au moins une antenne (8), des moyens d'affichage (9) et des moyens d'entrée (5),
l'appareil de communication portable (6) est conçu de telle manière que le variateur de vitesse jouant le rôle d'appareil (1)
■ soit télécommandable
■ que des paramètres de l'appareil (1) respectif soient modifiables
■ que des actions de l'appareil (1) respectif soient déclenchables
■ et que des modifications de l'état de fonctionnement ou de l'état de l'appareil (1) respectif soient déclenchables
par rayonnement à partir de l'appareil de communication portable (6),
et que le variateur de vitesse présente au moins des moyens (4) pour la réception et/ou l'émission de rayonnement et est commandé au moyen de différentes tables de codage qui sont utilisées pour la génération, la détermination et le calcul de suites d'impulsions du rayonnement,
et que le rayonnement est un rayonnement infrarouge ou comprenant des ondes acoustiques ou électromagnétiques telles que infrarouges, ondes radio, micro-ondes ou ondes à environ 2,45 GHz pour le standard Bluetooth,
et que l'appareil de communication portable (6) présente une interface IrDA (7) pour le rayonnement infrarouge,
et que l'appareil de communication portable (6) avec son antenne (8) est réalisé de manière à pouvoir établir une liaison de téléphonie mobile,
et que les moyens d'affichage (9) de l'appareil de communication portable (6) sont conçus de manière à pouvoir afficher des pages Internet,
et que des informations d'entrée entrées à l'aide des moyens d'entrée (9) de l'appareil de communication portable (6) peuvent être transmises au serveur par liaison de téléphonie mobile et/ou liaison Internet, au moyen duquel des informations pour une suite d'impulsions à émettre par rayonnement par l'appareil de communication portable (6) peuvent être déterminées et ces informations peuvent être transmises à l'appareil de communication portable pour l'émission de la suite d'impulsions,
et que les tables de codage sont prévues dans le serveur,
et que des moyens d'affichage (9) et des moyens d'entrée (5) sont réalisés de manière combinée sous forme d'écran tactile,
et que au moins une page Internet et/ou WAP, qui affiche au moins l'affectation des moyens d'entrée en fonction de l'appareil (1), peut être affichée à l'aide des moyens d'entrée (5) de l'appareil de communication portable (6),
et que le variateur de vitesse est conçu pour transmettre des jeux de paramètres du variateur de vitesse à l'appareil de communication portable et à les mémoriser sur celui-ci ou sur un serveur relié par liaison de téléphonie mobile, les jeux de paramètres étant transmissibles et activables sur un variateur de vitesse suivant.

2. Système selon la revendication 1,
**caractérisé par le fait**
**que** l'appareil de communication portable (6) est un téléphone portable (6) ou un organiseur ou un ordinateur portable.

3. Système selon la revendication 1,
**caractérisé par le fait**
**que** les jeux de paramètres mémorisés sur le serveur sont documentables, administrables ou évaluables.
